(19)

Europäisches
Patentamt
European
Patent Office
Office européen
des brevets

(11) **EP 4 694 285 A1**

(12) **EUROPEAN PATENT APPLICATION**

(43) Date of publication:
**11.02.2026 Bulletin 2026/07**

(21) Application number: **24306193.4**

(22) Date of filing: **16.07.2024**

(51) International Patent Classification (IPC):
*H04W 24/02* (2009.01)    *H04W 16/18* (2009.01)
*H04L 41/0823* (2022.01)   *H04L 41/16* (2022.01)
*H04W 16/22* (2009.01)

(52) Cooperative Patent Classification (CPC):
**H04W 24/02; H04L 41/0823; H04L 41/0866;
H04L 41/16; H04W 16/18;** H04W 16/22

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Commissariat à l'Energie Atomique et
aux Energies
Alternatives
75015 Paris (FR)**

(72) Inventor: **SANA, Mohamed
38054 GRENOBLE cedex 09 (FR)**

(74) Representative: **Atout PI Laplace
Immeuble Up On
25 Boulevard Romain Rolland
CS 40072
75685 Paris Cedex 14 (FR)**

(54) **SYSTEM AND A METHOD FOR CONTROLLING A RADIO ACCESS NETWORK**

(57)     There is provided a communication system
(100) comprising a core network and a Radio Access
Network (RAN) controller (6) comprising :
- a network state manager (60) configured to receive data
inputs at different instant times, in an observation time
window, a data input received at a given instant time
belonging to an input observation space and characterizing the state of the network at said given instant time,
the network state manager (60) being configured to apply
at least one self-organizing radio map (70A) to each data
input received at a given instant time, said at least one
self-organizing radio map (70A) comprising an array of a
set of units arranged in a grid describing said input observation space, which provides a best matching state
unit at said given instant time, said determined best
matching state units forming a state trajectory in the grid
of the self-Organizing radio map (70A);
- a change state detector (61) configured to determine a
state change vector from the best matching state units
determined for the data inputs received in said observation time window, the state change vector comprising
components, each component state of the change state
vector comprising an instant time and an associated best
matching state unit, among said determined best matching state units; and
- A network configuration manager (62) configured to
detect if a configuration change is to be triggered in the
RAN network from the state change vector, within a
coherence time of the RAN network.

**FIGURE 5**

## Description

### Technical field

The disclosure generally relates to the field of wireless communication networks, and more particularly, to a radio access network (RAN) controller, a system comprising such RAN controller and methods for controlling a Radio Access Network (RAN).

### Background

Wireless communications systems are widely deployed to support communication with end-users.

A wireless communication system uses a radio access network (RAN) to connect end-user devices (or user equipment) to other parts of a core network.

A RAN includes several network elements to connect the end-user devices to the core network.

A Radio Resource Management RRM is used to manage a RAN.

RRM involves strategies, algorithms, and/or procedures to manage the radio resources (such as for example power allocation, beamforming, channel assignment, etc.) of the RAN and optimize them as efficiently as possible.

Wireless communications are experiencing increasing demands for communication bandwidth, not only due to the exploding volume of data traffic, but also to the diversification of the characteristics and nature of the communicating objects. As a result, new applications and use cases are emerging, each with stringent requirements and complexity, leading to constant evolution and revolution of wireless communications to address these challenges. For example, the implementation of the fifth-generation (5G) networks involve multiple technologies, which become extremely sophisticated to support simultaneously a wide range and variety of heterogeneous services with different Quality of Service (QoS) requirements.

The Radio Resource Management (RRM) is therefore becoming more and more complex and calls for advanced, flexible, scalable, and low complexity solutions.

In this context, new disaggregated RAN architecture such as Open RAN (O-RAN) have been developed to make it possible to expose data and analytics to RAN controllers, enabling data-driven optimization, closed-loop control, and automation as disclosed for example in M. Polese, L. Bonati, S. D'Oro, S. Basagni, and T. Melodia, "Understanding O-RAN: Architecture, Interfaces, Algorithms, Security, and Research Challenges." arXiv, Aug. 01, 2022. Accessed: Mar. 12, 2024.

The O-RAN disaggregates the RAN functions into a centralized unit (CU), a distributed unit (DU), and a radio unit (RU). The CU is a logical node for hosting Radio Resource Control (RRC), Service Data Adaptation Protocol (SOAP), and/or Packet Data Convergence Protocol (PDCP) sublayers of the RAN. The DU is a logical node hosting Radio Link Control (RLC), Media Access Control (MAC), and Physical (PHY) sublayers of the RAN. The RU is a physical node that converts radio signals from antennas to digital signals that can be transmitted over the FrontHaul to a DU. These entities have open protocols and interfaces between them, that can be developed by different vendors.

The O-RAN further introduces two logical RAN intelligent controllers (RIC), comprising a non-real time (non-RT) RIC and a near-real time RIC, which receive data from various sources, including hundreds of Key Performance Measurements (KPMs) and additional contextual information. By processing these data and leveraging AI and ML algorithms, the RICs can determine and apply control policies and configurations/actions on the RAN, optimizing various aspects such as network and RAN slicing, load balancing, handovers, and scheduling policies as disclosed in US20210045193A1 or US20200252142A1.

However, with the increasing complexity of wireless networks, characterized by a dense deployment of heterogeneous devices with time-varying network traffic, topology and size (number of nodes), different service requirements, existing RICs are unable to efficiently and timely accommodate such dynamics for optimal RRM and network planning.

There is accordingly a need for an improved RAN controller and method capable of efficiently and timely managing and controlling the RAN.

### Summary of the disclosure

In order to address these and other problems, there is provided a communication system comprising a core network and a Radio Access Network, RAN, controller configured to control a RAN network, wherein the RAN controller comprises:

- a network state manager configured to receive data inputs at different instant times, in an observation time window, a data input received at a given instant time belonging to an input observation space and characterizing the state of the network at the given instant time, the network state manager being configured to apply at least one self-organizing radio map to each data input received at a given instant time, the at least one self-organizing radio map comprising an array of a set of units arranged in a grid describing the input observation space, which provides a best matching state unit at the given instant time, the determined best matching state units forming a state trajectory in the grid of the self-organizing radio map ;

- a change state detector configured to determine a state change vector from the best matching state units determined for the data inputs received in the observation time window, the state change vector comprising components, each component state of the change state vector comprising an instant time and an associated best matching state unit, among the determined best matching state units; and

- A network configuration manager configured to detect if a configuration change is to be triggered in the RAN network from the state change vector, within a coherence time of the RAN network.

In some embodiments, the change state detector may use a regression technique based on the determined best matching state units.

In some aspects, the network configuration manager may comprise a configuration management module configured to determine a Best Matching Configuration unit $BMCU_t$ for each determined Best Matching State unit corresponding to a given instant time, by applying at least one additional self-organizing radio map to each Best Matching State unit $BMSU_t$ comprised in the state change vector, the network configuration manager further comprising a configuration change detector configured to determine a configuration change vector, comprising components, each component of the configuration change vector comprising an instant time and an associated best matching configuration unit, among the determined best matching configuration units, wherein the configuration change vector is used to detect if a configuration change is to be triggered in the RAN network.

In some embodiments, the configuration state detector may use a regression technique based on the determined best matching configuration units.

In some aspects, the network configuration manager may comprise an action triggering module configured to trigger an action to be executed to trigger the detected configuration change.

The action triggering module may comprise a first unit configured to select one or more configuration change actions by mapping the current network state to one or more network configurations among predefined network configurations, according to a time criterion and to a cost criterion related to the performance parameters of the communication network.

The first unit may be configured to learn network configurations using a learning technique.

In some embodiments, the action triggering module may further comprise a second unit configured to evaluate the quality of the network configurations selected by the first unit.

The second unit may be configured to compare predicted rewards with learned rewards corresponding to actual rewards obtained during a learning time window, the predicted rewards being determined by the second unit by applying a prediction function which predicts an expected cumulative reward, representing a predicted reward, for a given pair comprising a network state and an associated network configuration, taking into account predefined penalties applied when time constraints are violated. The second unit may provide feedback to the first unit corresponding to the comparison.

In some aspects, each self-organizing radio map may be based on a neural network.

In some embodiments, the self-organizing radio map may be based on a Kohonen network.

In some aspects, the at least one self-organizing radio map used by the network state manager may represent different levels of representation of the input observation.

In some embodiments, the communication system may comprise two RAN Intelligent Controllers, the RAN controller being at least one of the RAN Intelligent Controllers.

There is further provided a RAN control method, implemented in a Radio Access Network, RAN, controller of a communication system, comprising a core network and the RAN controller, for controlling a RAN network. The method comprises:

- receiving data inputs at different instant times, in an observation time window, a data input received at a given instant time belonging to an input observation space and characterizing the state of the network at the given instant time,

- applying at least one self-organizing radio map to each data input received at a given instant time, the at least one self-organizing radio map comprising an array of a set of units arranged in a grid describing the input observation space, which provides a best matching state unit at a given instant time, the determined best matching state units forming a state trajectory in the grid of the self-organizing radio map;

- determining a state change vector from the determined best matching state units determined for the data inputs received in the observation time window, the state change vector comprising components, each component state of the change state vector comprising an instant time and an associated best matching state unit, among the determined best matching state units; and

- detecting if a configuration change is to be triggered in the RAN network from the state change vector, within a coherence time of the RAN network.

The radio access controller and the RAN control method according to the embodiments of the disclosure advantageously enable learning and determining proximal network configurations to be implemented within the coherence time of the control-loop, including network coherence time, thereby optimizing network utility functions. The time constraint includes not only the coherence time of the physical network but also time required for data collection and reporting.

**Brief description of the drawings**

The accompanying drawings, which are incorporated in and constitute a part of this specification, illustrate various embodiments of the disclosure together with the general description of the disclosure given above, and the detailed description of the embodiments given below.

Figure 1 represents an exemplary RAN structure in which embodiments of the disclosure may be implemented.

Figure 2 represents a RAN control system structure, according to some embodiments.

Figure 3 depicts a RAN control system architecture, according to some embodiments.

Figure 4 represents a Self-organizing map.

Figure 5 depicts an exemplary implementation of the RAN controller 60, according to some embodiments.

Figure 6 represents the structure of the network configuration manager 62, according to some embodiments.

Figure 7 is a flowchart depicting the steps of the RAN control method implemented to determine a change state vector s from the received observations in a time window, according to some embodiments.

Figure 8 is a flowchart representing the depicting the steps of the RAN control method implemented to manage the configuration state changes of the network, according to some embodiments.

Figure 9 depicts the structure of the action triggering manager, according to some embodiments.

Figure 10 represents the message exchange for Radio Resource Management, using the RAN controller, according to some embodiments.

Figure 11 is a diagram comparing the evolution of the network throughput R(t) and load L(t) over the time t according to the embodiments of the disclosure, with respect to prior art approaches.

**Detailed description**

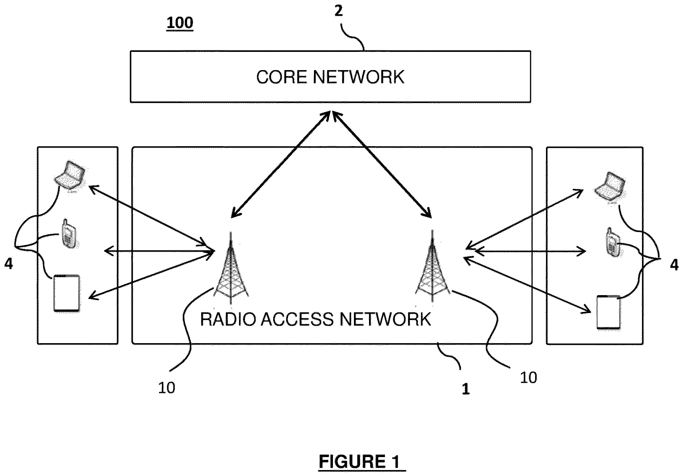

Referring to Figure 1, there is shown an exemplary RAN structure in which embodiments of the present disclosure may be implemented.

The RAN 1 is configured to connect user devices 4 (or user equipments) to other parts of a wireless communication system 100. The RAN 1 is the radio element of the wireless communication system 100. The RAN 1 provides access and coordinates the management of resources across the radio sites. The RAN 1 may use a Radio Access Technology (RAT).

The wireless communication system 100 comprises the Radio Access Network (RAN) 1 and a Core Network (CN) 2 which controls the network. The RAN 1 wirelessly connects user equipments to the core network 2. The RAN 1 is the final link between the network and the user devices. A user device 4 may be for example and without limitations a mobile phone, a computer, a laptop, a tablet, a drone, an IoT device, etc. The RAN 1 may use radio frequencies to provide wireless connectivity to the user devices 4.

The user devices 4 may be equipped with a plurality of transmit and/or receive antennas, and may implement space-time coding and/or space-time decoding techniques may be used in combination with coded modulations for encoding data both in the time and space dimensions.

The RAN 1 comprises base stations 10 and antennas that cover an area, depending on their capacity.

In response to a signal received by at least one antenna from a user device 4, the received signal is digitized in the RAN base station 10 and connected to the core network 2. The core network CN 2 is configured to provide coordination between different parts of the access network and provides connectivity to the internet. For example, the core network may be configured to provide access controls (user authentication), route phone calls, and/or control the network by making handovers happen as a user moves from coverage provided by one RAN tower to the next.

The RAN 1 may comprise:

- Baseband units BBU, which are configured to provide a set of computer-intensive signal processing functions that makes wireless communication possible.

- Radio Units RU (also called RRH, acronym for Remote Radio Head) configured to receive and convert digital information into signals for the RAN base station. The RU receives the antennas signal information, and communicates with a BBU using a CPRI interface (Common Radio Public Interface). The BBU is adapted to take the signal information and process it so that they can be transmitted to the Core network.

- multiple antennas which are configured to convert (or radiate) the electrical signals into radio waves.

A radio access network antenna is configured to receive a signal from a user device and send it to the core network CN 2 via the baseband units BBU.

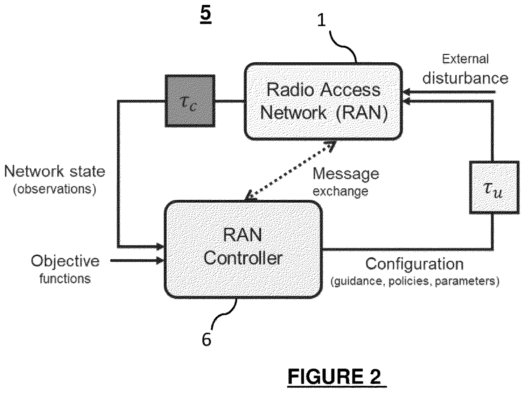

Figure 2 represents a RAN control system structure 5, according to some embodiments. The RAN control system structure 5 comprises the Radio Access Network RAN 1 and at least one RAN controller 6 configured to control the RAN.

The RAN controller 6 is configured to control and optimize the RAN functions in the RAN 1 architecture, using data received from several data sources.

In one exemplary embodiment, the RAN 1 may be the Open RAN (or O-RAN) which comprises a non-real time Radio Intelligent Controller RIC and a near-real time Radio Intelligent Controller RIC. O-RAN refers to the O-RAN ALLIANCE or its designated specifications (O-RAN Alliance is a specification group defining next-generation RAN infrastructures, empowered by principles of intelligence and openness). In such exemplary embodiment, the RAN controller 6 according to the embodiment of the disclosure may be used to implement the non-real time RIC and/or the near-real time RIC (at least one of the two RICs). A RIC is a new network element that enables services to be introduced into the Radio Network, such as software that optimizes the performance of the network. The RIC operates by exposing an API (application programming interface) that enables software talk to each other.

The skilled person will however readily understand that the invention is not limited to O-RAN and may be applied to other types of RAN, such as for example and without limitations Cloud RAN or vRAN, C-RAN, Global System for Mobile communications (GSM) RAN, or GRAN, GSM EDGE RAN, or GERAN, Universal Mobile Telecommunications System (UMTS) Terrestrial RAN, or UTRAN, Evolved Universal Terrestrial RAN, or E-UTRAN, which is part of LTE.

The RAN network controller 6 may receive a set of data from one or more data sources, including data

$$o_t \in \mathcal{O} \subset \mathbb{R}^d$$

measurements (data inputs) denoted , characterizing the state of the wireless network of the wireless communication system, at a given time t.

From the received set of measurements $o_t$, the RAN network controller 6 is configured to determine whether a network configuration $c \in \mathcal{C}$ is to be implemented, within a certain coherence time $\tau_c$ of the network, such that $\tau_u \leq \tau_c$ in order to maximize predefined network utility functions, also referred to as "objective functions", with $\tau_u$ denoting the update times.

The set of data inputs $o_t$ may comprise a plurality of radio parameters or signals that may be measured, computed, estimated, or determined including for example and without limitations

- the signal strength of a received signal (Received Signal Strength (RSS) or Received Signal Strength Indicator (RSSI)) which is a measurement of the power present in a received radio signal, such as for example between a base station and a user equipment,

- an estimated signal angle of arrival/departure of a received signal,

- estimated channel gain or state information,

- a quality of service QoS parameter,

- base stations and/or users locations,

- base stations and/or users energy consumption,

- traffic requests, and/or

- mobility parameters, etc.

As used herein, a 'network configuration' refers to a definition of a set of radio parameters (such as for example and without limitations a modulation and channel coding scheme, power allocation, beamforming configuration), and/or policies (such as for example and without limitation user-access point association policies) including Artificial Intelligence (AI) or Machine Learning (ML) models that are to be implemented to support the operation of network functions (e.g., power allocation, user association, etc.) in the RAN 1 to achieve predefined network objectives (also referred to as objective functions).

For example, a network configuration may consist in defining a power/spectrum allocation strategy to improve the RSS of a set of UEs, thereby improving the perceived throughput or QoS.

A network configuration may be a ML/AI model, which can be downloaded on the RAN 1 to support radio resource management.

A MUAI model may be for example:

- a ML/AI model for predicting the mobility of a user device whose information can be used to pro-actively anticipate a drop in its QoS and plan possible countermeasures.

- a ML/AI model for defining the optimal positioning of mobile access points to provide coverage and improved QoS to UEs based on a set of radio measurements (e.g. UE positions, traffic requests)

Exemplary predefined network objectives may include for example and without limitations:

- maximizing network throughput or energy efficiency,

- minimizing latency, or

- optimizing end-user quality of service, etc.

In the prior art, defining the optimal configuration for a given observed network state is a challenging problem, which generally involves solving a non-convex and/or a NP-hard combinatorial problem. This difficulty is even exacerbated in the new generation of wireless networks with diverse and wide range of heterogeneous services, complex multi-radio technologies, complex interference and beamforming management (due to e.g., densification and highly dynamic mmWave channels).

Many possible optimal configurations may exist for a given (observed) network state. Moreover, different observations may produce the same outcome, i.e., the same configuration for the network, thus, allowing possible states compression. In addition, the optimal network configuration for a given state, even if it is found, is not always guarantee to be implemented within the coherence time $\tau_c$ of the network. In other words, the dynamic of the network may be such that by the time the solution is fully implemented the network state has changed, thus degrading the performance of the network.

The coherence time $\tau_c$ of the RAN refers to the time during which the solution of the configuration problem does not change significantly (i.e. time during which it can be assumed that the RAN exhibits a stable behavior).

To overcome these prior limitations, the embodiments of the disclosure provide an improve RAN controller 6 and RAN control method capable of learning and determining proximal network configurations, which can be implemented within the coherence time of the network while optimizing predefine network utility functions.

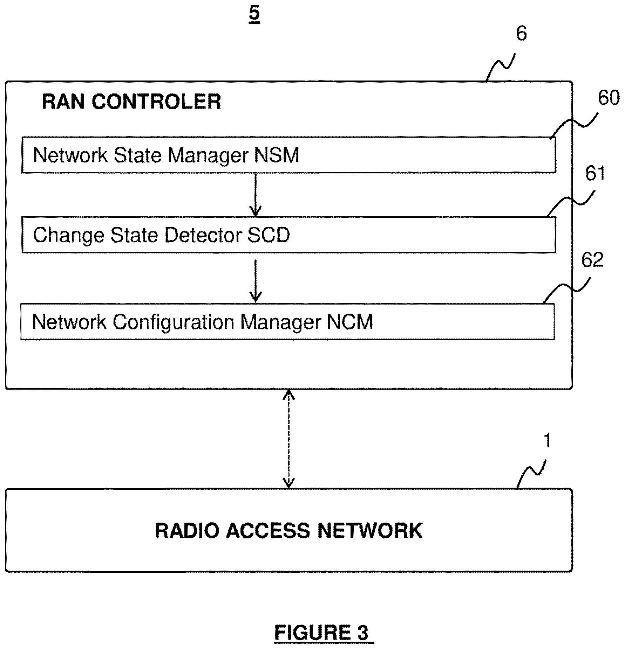

Figure 3 depicts the RAN control system architecture 5, according to some embodiments, which includes a RAN controller 6 capable of learning proximal network configuration. The RAN control system architecture 5 comprises at least:

- A network state manager (NSM) 60 ;

- A state change detector (SCD) 61;

- A network configuration manager (NCM) 62.

The network state manager (NSM) 60 and the network configuration manager (NCM) 62 is advantageously implemented using at least one Self-Organizing Radio Map (SORM) 70A, for learning proximal network configurations.

A SORM can be advantageously implemented using Kohonen networks also known as Self-Organizing Map (SOM) and more generally neural networks.

The use of at least one SORM for learning proximal network configurations presents the advantages of offering low-complexity, dimension-reduction capability, and topological-preserving structure.

In some embodiments, the network configuration manager (NCM) 62 may be also implemented using at least one self-organizing radio map (SORM) 70B.

A SORM will be generally designated by reference 70. The at least one SORM specifically used by the network state manager 60 will be denoted by reference 70A and the at least one SORM specifically used the network configuration manager 62 will be denoted by reference 70B.

A SORM is an unsupervised artificial neural network that converts high-dimensional input data into a low-dimensional and topologically ordered output representation. This property makes it easy to interpret complex data-structure through a SORM, since similar input data have proximal output representations.

A SORM 70 comprises an array of fixed set of units topologically generally arranged in a grid (or map) of size $N \times M$ describing the input observation space $\mathcal{O} \subset \mathbb{R}^d$.

A SORM 70 is configured to receive an input observation $o_t \in \mathcal{O} \subset \mathbb{R}^d$, which may comprise a set of representative radio parameters.

The grid is a grid of weights having any dimensional model, such as for example a 2D or 3D grid of weights. The grid may be rectangular or have any other suitable structure such as a hexagonal grid.

The SORMs 70A and 70B are used to produce a low-dimensional representation of a higher-dimensional data set corresponding to an observation data space, while preserving the topological structure of the data.

A SORM 70 is a type of artificial neural network, and as such operates in two phases comprising a training phase and a mapping phase. In the training mode, the SORM 70 uses an input data set to generate a lower-dimensional representation of the input data space (observation data space) corresponding to a generated map. In the mapping mode, the SORM 70 is applied to classify the received data inputs, using the generated map.

The SORM 70A ('state SORM') enables a representation of the different possible states of the network in the form of a set of finite states. It provides a radio mapping in which the closest possible states are located close to each other. It enables representing the evolution of the network states.

The SORM 70A represents the network states in an organized way while enabling to 'explain' (i.e. provide information about the causes of) the evolution of the network states.

The SORM 70B ('configuration SORM') enables a representation of the different possible configurations of the network in the form of a set of finite configurations. It provides a radio mapping in which the closest possible configurations are located close to each other. It enables representing the evolution of the network configurations.

The RAN controller 6 and the RAN control method according to the embodiments of the disclosure use a representation of the network states and network configurations to be able to anticipate network configuration changes.

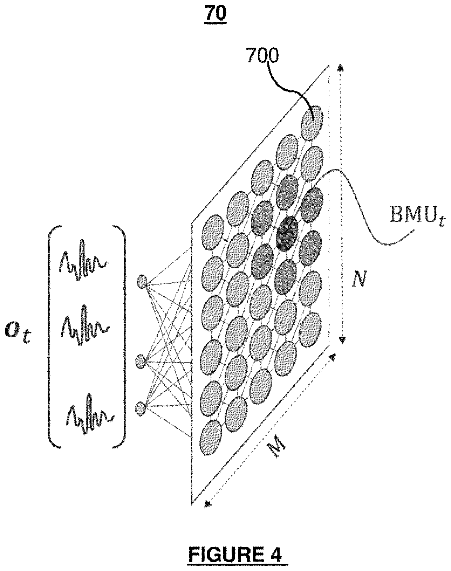

Figure 4 represents a Self-organizing map 70. A Self-organizing map 70 comprises a set of units or neurons 700 organized in a grid of size $N \times M$. Each unit 700 corresponds to a pair of coordinates $(i, j)$ in the map 70 and is associated with at least one weight vector $w(i, j) \in \mathbb{R}^d$.

A Self-organizing map 70 is used to determine a set of Best Matching Units $BMU_t$, also generally referred to as BMUs, using a learning method.

The best matching unit refers to the unit that describes the best the input observation/data. Units/neurons can be seen as low-dimensional versions of the input data. When observing an input data, the SORM is configured to look for the unit (the low dimensional version) that captures the best this observation in the representation space.

The learning method may comprise one or more iterations (learning iterations). The learning of a SORM (in the training phase) consists in finding a suitable set of weights $w(i,j)$ for each unit 700 corresponding to coordinates $(i,j)$ so that the network models the distribution of the data input $i_t$ applied to the SORM 70. The SORM 70A is configured to receive data input at time instant $t$ denoted $o_t$ (observed data inputs).

Finding the Best Matching Unit (generally noted BMU, and specifically BMSU in the case of the network state manager 60 and BMCU in the case if the network configuration manager 63) in the SORM 70 may consist in identifying the unit that is the closest to the input observation $i_t$ corresponding to the measurements received by the SORM 70, according to a similarity metric. For instance, the similarity metric may be the Euclidean distance. In such example, the SORM may consist in identifying the unit 700 having the minimum distance to the observation $i_t$, such unit being then chosen as a BMU.

The RAN controller 6 thereby exploits the proximity between two units in a SORM 70 to define the degree of similarity between them.

Although the description of some embodiments of the disclosure will be made mainly with reference to a similarity metric corresponding to the Euclidean distance, the skilled person will readily understand that the disclosure is not limited to the Euclidean distance, and that other similarity metrics can be used alternatively such as for example and without limitations the cosine similarity, the Manhatta distance, the Minkowski distance, the Hamming distance, or the Chebychev distance.

In the network state manager 60 and the network configuration manager 62, the SORM 70A and 70B are used to represent the evolution of the identified BMU along the time. The darker units correspond to the BMU at the current time. Each time, there is only one BMU identified by a SORM 70A or 70B. But nothing prevent from outputting during the inference phase e.g. the K-matching units (the K units that describe the most the input observation).

The training phase of a SORM 70 comprises one or more iterations (referred to as 'learning iterations') of learning steps.

At each learning iteration, the weight $w_t(i,j)$ of each unit, at time $t$, in the SORM 70 may be updated towards the BMU, using an updating that is similar to the gradient descent algorithm, according to the following equation (1):

$$w_t(i, j) = w_t(i, j) + \eta_t \, \mathcal{N}(i, j, \mathrm{BMU}_t)(o_t - w_t(i, j)) \quad (1)$$

In equation 1:

- $\eta_t$ denotes the learning rate, annealed over time;

- $\mathcal{N}(i, j, \mathrm{BMU}_t)$ is a neighborhood function, measuring the similarity between the identified BMU at time $t$ and the unit at location $(i,j)$ in the grid. This function defines at each iteration, the number of neighboring units to the considered BMU, which are affected by the training. This function can take different forms. For example and without limitations, the neighborhood function may be a 2D Gaussian function or a Mexican hat function.

Equation 1 expresses the general update rules of a SORM 70A or 70B in the form of a gradient descent.

In the following description of some embodiments, it is considered that the SORMs 70A and 70B have been previously trained in the training phase to learn the weights $w_t(i,j)$ of the SORMs, before being used respectively by the network state manager 60 and/or the network configuration manager 62.

Alternatively, in some embodiments, the SORMs 70A and 70B may be trained online, for example if it is needed to specialize them for a specific network environment or services (i.e. for specific objective functions). In this case, the weights of the SORMs may be updated online in a close-loop manner using reinforcement learning: given an observation, select a network configuration, receive a reward corresponding of the value of the pre-defined network objective function, then update the weight of the SORMs and iterate so as to maximize the reward function.

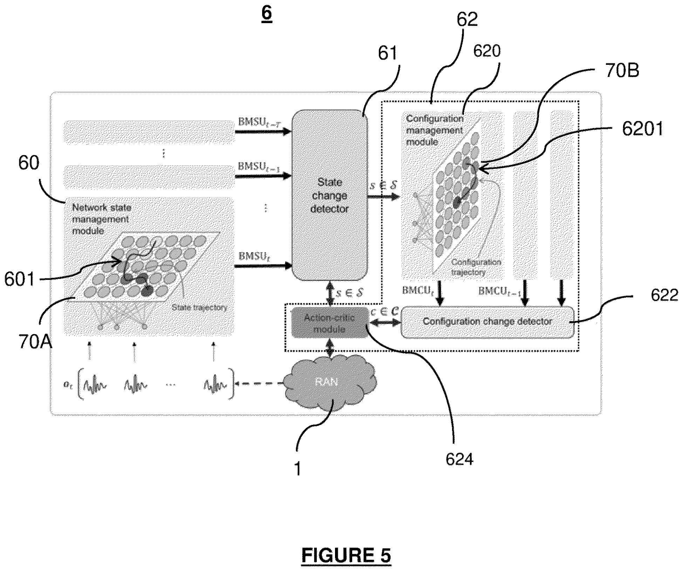

Figure 5 depicts an exemplary implementation of the RAN controller 60, according to some embodiments.

The network state manager 60 is configured to use at least one SORM 70A to map and structures incoming RAN observations $o_t$ in a fixed set of network states (referred to as "state units"), topologically organized to provide information (i.e. explain) that better the evolution of the network dynamic. The network state manager 60 acts as a state compressor, mapper and descriptor.

The network state manager 60 is configured to determine a BMSU$t$ (acronym 'Best Matching State Unit') using the at least one SORM 70A, in response to the receipt of a RAN observation $o_t$ at instant time $t$.

The determined BMSU$t$ may be stored in a BMSU storage unit (not represented). The BMSU storage unit may be for example a dictionary storing previously identified BMSUs and fed by the determined BMSU$t$ at different instant times t - $\tau$, t - 1,..., t.

Due to the topological structure of the SORM 70A, a small change in the network dynamic may result in a small change in the BMSUs (i.e., the identified BMSUs which are close to each other in the SORM grid 70A).

The first trajectory 601 (also called 'state trajectory') of the BMSUs in the SORM grid 70A (represented by a curve passing through the shaded BMSUs) represents the evolution of the network dynamics.

The network state manager 60 thereby provides, for a received data input $o_t$ corresponding to a RAN observation, the BMSU of the SORM grid 70A that better represents the observation and a trajectory 601 representing the collection of the BMSUs observed in the considered network state, which represents the evolution of the network dynamics.

An abrupt change of the trajectory 601 may translate into a strong change in the network state, and may thereby require a new configuration. The trajectory 601 is a collection of the BMSUs that have been observed in the state corresponding to the input observation and traduces the evolution of the network state.

The State Change Detector 61 is configured to detect such state change in network dynamics using the trajectory 601 represented by the determined BMSUs between $t - \tau$ and $t$ (time window having a $\tau$ duration). The state Change Detector 61 is therefore configured to receive the different BMSUs (collection of BMSUs corresponding to the first trajectory 601) determined in the time window of $\tau$ duration and to provide a change state vector $s \in S$.

The State Change Detector 61 may determine the state change vector s from the received time series of BMSUs (ordered by time instants) by implementing a change-point detector or anomaly detector adapted for continuously monitoring the collection of BMSUs (as stored in the BMSUs memory for example). The change-point or anomaly detector may be based on any suitable technique, such as for example and without limitations, the Pruned Exact Linear Time (PELT) technique described in Killick, R., Fearnhead, P., & Eckley, I. A. (2012). Optimal detection of changepoints with a linear computational cost. Journal of the American Statistical Association, 107(500), 1590-1598. The PELT proceeds by minimizing a cost function, such as the sum of squared errors or the negative log-likelihood over possible number and locations of change-points. The PELT algorithm is particularly efficient in identifying multiple change-points in large data sets. Other change detection algorithms include for example and without limitations Binary Segmentation, Window Sliding Segmentation or Kernel Change Detection. The choice of the change detection algorithm depends on the specific characteristics of the radio parameters or signals that compose $o_t$ and the requirements of the application. Indeed, a change point may define a significant change in the mean and/or variance or any statistical measures on the received collection of BMSUs. A change detection in the mean may be relevant for identifying change in the traffic request distribution of the user devices while a change in the variance may be relevant for assessing the dispersion of the user equipment due to mobility.

The change state vector $s \in S$ comprises a number of components, each component of the change state vector s corresponding to a BMSU identified as a change-point and an associated instant time.

The network configuration manager 62 may be configured to determine if a state change configuration is to be implemented and trigger the state change configuration in response to the receipt of the change state vector $s \in S$.

In response to the determination of the change state vector $s \in S$, the network configuration manager 62 may request a network configuration change from the BMSUs identified as change-points by the change state detector 61, in the change state vector $s \in S$.

The request for a new network configuration depends on the values of the change state vector $s \in S$.

In some aspects, the network configuration manager 62 may not request a new network configuration as a network state change detected from the change state vector s may not necessarily require a change in the network configuration.

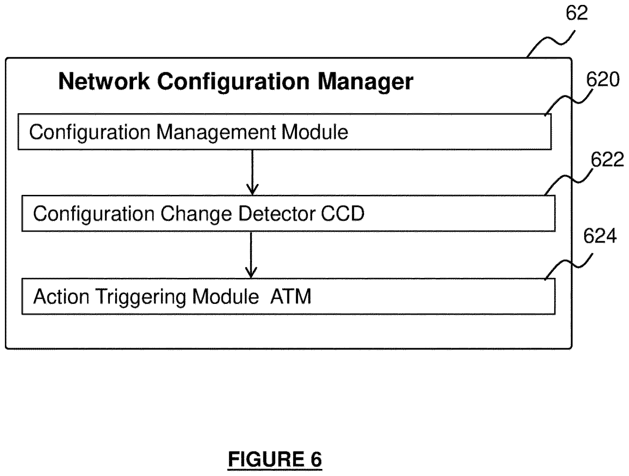

Figure 6 represents the structure of the network configuration manager 62, according to some embodiments.

The network configuration manager 62 (NCM) may comprise a configuration management module 620 (CMM) configured to determine if a network configuration change is needed from the information comprised in the change state vector $s \in S$.

The configuration management module 620 is configured to identify change points from the change state vector $s \in S$. The change points may include configuration change points and/or network state change points.

The configuration management module 620 may implement at least one Self-Organizing Map (SORM) 70B to keep track of the possible configuration changes. This enables preventing frequent and uncontrolled network configuration updates including false alarms, which may induce some operational costs and lead to performance degradation.

The Self-Organizing Map 70B is used to determine a set of Best Matching Units $BMCU_t$ (acronym for 'Best Matching Configuration Unit'), the Best Matching Units $BMCU_t$ (from $t, t - 1, ..., t - \tau$) being the units that are the closest to components of the received state change vector s, according to a similarity metric (for example the Euclidean distance).

The list of Best Matching Units $BMCU_t$ determined by the SORM 70B represents a second trajectory 6201 (also called 'configuration trajectory'). The second trajectory 6201 represents the evolution of the configuration of the network state.

The list of $BMCU_t$ determined by the configuration management module 620 may then be sent to the configuration change detector 622.

The configuration change detector 622 is configured to detect if a configuration network state is needed from the $BMCU_t$ determined by the configuration management module 620.

The configuration change detector 622 is adapted to receive the list of the Best Matching Units $BMCU_t$ representing the configuration trajectory 6201, and determine if a new network configuration is needed. This enables anticipating a configuration change, without a need to modify the current network configuration (for example without disconnecting the use devices). This therefore avoids perturbing the network.

The Best Matching Units $BMCU_t$ determined at each instant time ($t - \tau, ..., t-1, t$) may be stored in a BMCUs memory (not represented).

The configuration change detector 622 may provide a configuration change vector $c \in \mathcal{C}$ corresponding to a configuration state change request or recommendation.

The network configuration manager 62 may further comprise an action triggering manager 624 (also referred to as an 'actor-critic module') configured to trigger configuration actions, in response to the receipt of the configuration state change vector $c \in \mathcal{C}$ .

The configuration state change vector $c \in \mathcal{C}$ may comprise a set of instant times corresponding to the times at which changes in the observed temporal series $o(t)$ occurred (detected change point times) and, for each instant time, the corresponding network configuration ($BMCU_t$).

The action triggering manager 624 may be configured to determine a new proximal configuration to the RAN 1 taking into account the timing constraints, in response to the configuration state change vector $c \in \mathcal{C}$ .

The action triggering manager 624 may request a change in the configuration of one or more RAN elements in response to a network state change detected from the identified change points, such as for example an abrupt network state change.

The state change detector 61 and the network configuration manager 62 enable anticipating the changes in the network, without perturbation of the network (i.e. without a need to change instantaneously the current network configuration state by over-reacting to an observed event).

This is particularly advantageous as in the network, the events can be observed but there is a constrained time limit (defined by the time duration $\tau$) to implement configuration changes. The network configuration changes have to be fast so that anticipation of such changes is advantageous.

Another advantage of the RAN controller 6 according to embodiments of the disclosure relates to the change state vector $s \in S$ that indicates the causes of the state change (i.e. explicability). SORM allows easy visualization of complex data structure on a simple 2D map. By constantly monitoring the state and configuration trajectories across the different SORMs, the RAN controller 6 according to the invention can classify what change points produce what configuration actions. In contrast, in prior art solutions, it is difficult to control the management chain of the network (when an action is implemented in the network such as a configuration chain, the cause underlying the action decision (explicability) is not dynamically available).

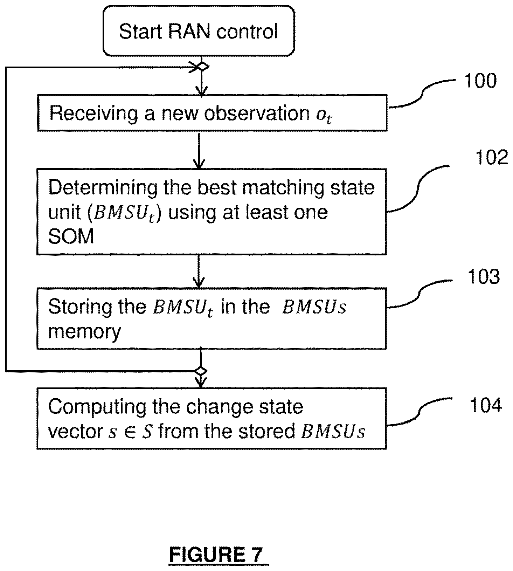

Figure 7 is a flowchart depicting the steps of the RAN control method implemented for determining a change state vector s from the received observations in a time window, according to some embodiments. The flowchart of figure 7 may be implemented by the network state manager 60.

In step 100, a new observation $o_t$ is received (data input) by the network state manager 60.

In steps 102, the best matching state unit ($BMSU_t$) corresponding to the unit that is the closest to the observed input $o_t$, according to the similarity metrics, is determined using at least one SORM 70A.

In step 103, the currently determined $BMSU_t$ may be stored in a BMSU memory, such as for example a dictionary, storing previously identified BMSUs at instant times $t - \tau,..., t$.

Steps 100 to 103 are iterated for each received observations in the time window $[t - \tau ; t]$.

This provides the state trajectory 601 formed by the determined BMSU in the SORM grid 70A representing the evolution of the network dynamic.

In step 104, the change state vectors may be determined from the stored BMSUs corresponding to instant times $t - \tau, ..., t$. The change state vectors provides identified change points corresponding to the determined BSMUs in the time window $[t - \tau ; t]$.

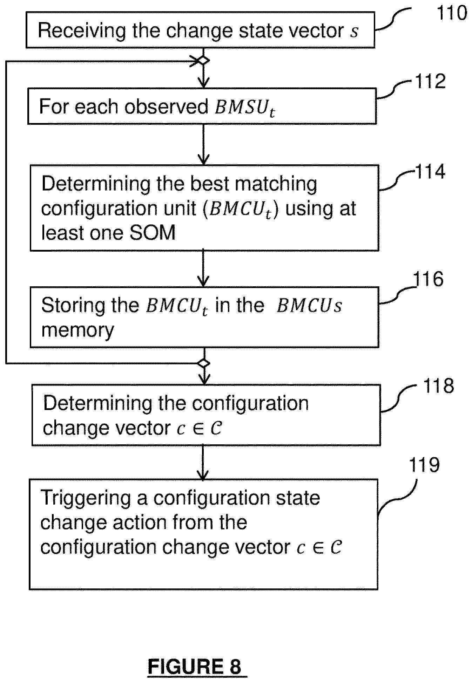

Figure 8 is a flowchart representing the method for controlling the configuration state changes of the network, according to some embodiments, in response to the receipt of the change state vector s. The flowchart of figure 8 may be implemented by the network configuration manager 62.

In step 110, the change state vector s corresponding to observed BMSUs, in the time window $[t - \tau ; t]$, may be received.

In steps 112 to 116, a set of best matching configuration units BMCUs which are the closest to the state change vector s components (corresponding to BSMUs), according to the similarity criteria, are determined.

More specifically, in step 114, for each observed $BMSU_t$ (block 112), corresponding to instant time $t$, a $BMCU_t$ is determined using at least one SORM 70B.

In step 116, the determined best matching configuration unit $BMCU_t$ corresponding to the given instant time $t$ may be stored in a BMCUs memory, such as a BMCUs dictionary. The BMCUs memory may therefore add the determined $BMCU_t$ corresponding to instant time t, to the previously stored BMCUs corresponding to preceding instant times $t - 1, ..., t - \tau$.

The set of BMCUs, as stored, forms the configuration trajectory 6201 in the SORM grid 70B represented by a curve passing through the shaded BMCUs. The second trajectory 6201 represents the evolution of the network configuration dynamics.

In step 118, it may be detected if a configuration change state is needed from the stored BMCUs corresponding to change points. Step 118 provides the vector $c \in \mathcal{C}$ which corresponds to a configuration state change request or recommendation.

In step 119, network configuration state change may be recommended or requested, by the RAN controller 6, using the vector $c \in \mathcal{C}$, which indicates identified configuration change-points and network state change-points. The recommended or requested network configuration state change may be a new proximal configuration taking into account the timing constraints.

The recommended or requested configuration actions may be then implemented in the network such as for example and without limitations:

- Reallocating transmission power (or frequency or communication bandwidth) to improve the QoS of a least one user equipment;

- Switching on/off some base stations to accommodate with the change in the data traffic demand or minimize energy consumption;

- Transferring at least one user equipment from its current base station to another (aka. cell re-association or handover) for e.g. due to mobility;

- Changing the network topology (re-organizing, re-defining the position of access points) to accommodate the varying traffic demand, as is needed for example in mobile network with UAVs.

Steps 110 - 119 may be advantageously performed within the coherence time $\tau_c$, as the proposed configuration should be executed within this time.

Representing network observations in a SORM 70 advantageously enables incorporating directly temporal aspects into the configuration state change problem. Indeed, the distance between the BMSU at time t-1 and t quantifies how much the network state has changed within the observation time window. In addition, the organization of network configurations as a SORM 70 makes it possible to define a proximal configuration cost or reward, associated to one-step move in the configuration grid. Such proximal configuration cost or reward may be related for example to power/energy consumption and/or RAN performance (e.g. throughput). It further enables quantifying the time required to move from one configuration to another as a function of the distance in the configuration grid. The problem of defining the best configuration to be implemented within a certain coherence time then becomes a planning problem.

The action triggering manager 624 enables making configuration state change decision and determining configuration plans taking into account timing constraints.

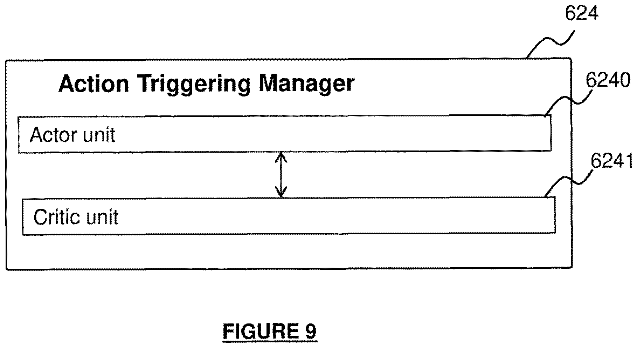

Figure 9 depicts the structure of the action triggering manager 624 ('actor-critic module') according to some embodiments.

The actor-critic module 624 may comprise a first unit 6240, referred to hereinafter as 'actor unit', configured to select one or more configuration change actions by mapping the current network state to one or more network configurations among predefined network configurations, according to a time criterion and to a cost criterion related to the performance parameters of the communication network (100).

The actor-critic module 624 may comprise a second unit 6241, referred to as hereinafter as 'critic unit', configured to evaluate the quality of the network configurations selected by the first unit 6240.

The actor unit 6240 is configured to learn network configurations using a learning technique.

The actor unit 6240 may therefore map the network state to network configurations defining an optimal policy (referred to as an actor policy) that maximizes/minimize a cumulative reward/cost over time, which represents the overall performance and efficiency of the wireless network. In this case, the actor policy may take into account the time constraints to select network configurations. This may involve learning to prioritize configurations with shorter implementation durations or learning to balance the trade-offs between task completion and time constraints.

In the following description of some embodiments, the notation $\pi: \mathcal{C} \to \mathcal{A}$ will be used to denote a radio resource management policy, which associates each network state vector $c \in \mathcal{C}$ with a network configuration action $a = \pi(c) \in \mathcal{A}$ corresponding to the network configuration being selected for implementation in the RAN. A network configuration action "$a$" may correspond for example to an MCS or a cell selection.

The learning mechanism is configured to maximize the expected sum of $\gamma$-discounted reward (also known as the value function) according to formula (2):

$$V_i(\pi) = \mathbb{E}_\pi[\sum_{t=0}^{\infty} \gamma^t R_i(c_t, \pi(c_t))] \quad (2)$$

In formula (2), $R_i(c_t, \pi(c_t))$ corresponds to the reward perceived at the t-th step for the *i*-th objective after observing $c_t$ and implementing action $a_t = \pi(c_t)$.

As used herein, an objective refers to a targeted network performance. For instance, it may be desired to maximize the throughput of the network (sum of user capacity) while guaranteeing that the actions being selected do not violate the imposed time constraint. In this case, the learning agent may receive two rewards, one corresponding to the throughput and another corresponding to the time constraint violation (e.g. a boolean indicating whether the action was implemented in time or not).

The optimization problem can then be formulated according to formula (3)

$$\pi^* = \max_{\pi \in \Pi} V_0(\pi) \text{ subject to } V_i(\pi) \geq \delta_i \quad (3)$$

Finding the best policy $\pi^*$ over a set of possible policy $\Pi$ that maximize the value function of the first objective (e.g. maximizing network throughput) while guaranteeing possibly additional constraint (e.g. making sure that the number of time the timing-constraint is not violated is above a certain threshold defined here by $\delta_i$).

The exponential decay factor $\gamma \in [0,1)$ ensures bounded returns.

The critic unit 6241 may be configured to compare predicted rewards with learned rewards corresponding to actual rewards obtained during a learning time window, said predicted rewards being determined by the second unit by applying a prediction function which predicts an expected cumulative reward, representing a predicted reward, for a given pair comprising a network state and an associated network configuration, taking into account predefined penalties applied when time constraints are violated. The critic unit 6241 may thereby provide a feedback, corresponding to the comparison results, to the actor unit 6240.

The critic unit 6241 may for example learn to estimate a prediction function being the value function or the Q-function which predicts the expected cumulative reward for a given state-configuration pair, taking into account the potential penalties for violating the time constraints. By comparing the predicted rewards with the actual rewards obtained, the Critic unit 6241 may provide feedback to the actor unit 6240, guiding it towards better decisions and helping it improve its policy over time.

The Actor-Critic module 624, the SORMs 70A and 70B in the Network State Management module 60, and/or the network configuration manager 62 may be learned separately or jointly in an end-to-end fashion using a reinforcement learning technique such as for example and without limitations Q learning, proximal policy optimization, etc.

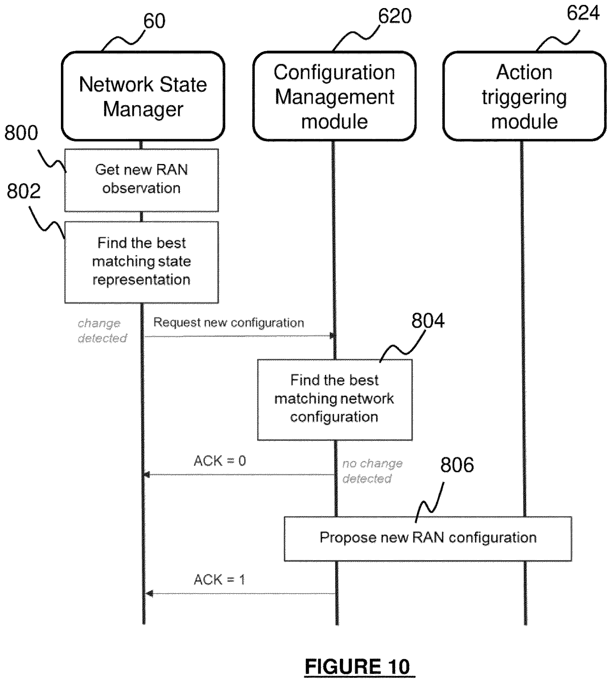

Figure 10 represents the message exchange for Radio Resource Management, using the RAN controller 6 according to the embodiments of the disclosure.

As shown in figure 10, the network state manager 60 may receive a new RAN observation $o_t$ (block 800) and determine the Best Matching State Unit (best matching state representation) in block 802, in response to the receipt of the RAN observation $o_t$. The determined BMSUs at instant time $t - \tau$ to t may be stored it in the BMSUs memory. The network state manager 60 may request a new configuration to the network configuration management module 620 when a change is detected from the stored BMSUs.

The configuration management module 620 is configured to receive new observed BMSUs, determine the Best Matching Configuration Unit BMCU (Best Matching Configuration Representation) in response to the received observation (observed BMSUs), in block 804 and request or recommend a new configuration to the action triggering manager 624, in block 806, in response to the detection of a change from the BMCUs corresponding to instant times $t - \tau$ to $t$ (which may be stored in a BMCUs memory). The configuration management module 620 may send back an acknowledgement signal ACK to the network state manager 622 having a first value (for example 0) if no change is detected or a second value (for example 1) if a change is detected from the BMCUs.

The ACK signal allows the network state manager 622 to refine the change points detection algorithm preventing from reporting false alarm events to the network configuration management module 620.

The ACK signal allows the network state manager 622 to refine the change points detection algorithm preventing from reporting false alarm events to the Network Configuration Management Module 620.

The skilled person will readily understand that while embodiments of the disclosure have been illustrated by a description of examples, the disclosure is not limited to such examples. In particular, the configuration management module 620 may comprise one or more self-organizing radio maps SORMs 70A and 70B describing different levels of semantics in the observation $o_t$. In other words, the SORMs capture different levels of representation (highlighting different characteristics or parameters) of the input observation $o_t$, such as for example and without limitation a SORM representing information related to the radio propagation environment and a SORM capturing information related to user equipment characteristics (such as for example mobility or traffic demand). A SORM accordingly captures/represents information related to fast/slow events (e.g. the traffic demand and the channel state information do not necessarily vary on the same time scale).

Further, the State change detector 61 may be configured to detect a change in the network state using any suitable change detection algorithm based on the stored BMSUs (previously observed BMSUs from $t - \tau$ to $t$), such as for example and without limitations a change in the probability density function, a maximum likelihood estimation, a change in mean/variance, etc.

Similarly, the configuration management module 620 may comprise one or more self-organizing radio maps describing different levels of configuration criticality, which correspond to different levels of representation of the configurations such as and without any limitation, a SORM maintaining/representing configurations related to (near) RT control actions (for example responding to events/applications that require fast network configuration or reconfiguration, such as for mission critical communications, e.g. reallocating transmission power to prevent drop in UE QoS) and a SORM maintaining/representing nRT configurations (responding to events/applications that works on a larger timescale, predicting and anticipating the traffic/load of e.g. next hour).

The configuration change detector 622 may also use any suitable change detection algorithm based on the stored BMCUs (previously observed BMCUs from t - $\tau$ to t), such as for example and without limitations a change in probability density function, a maximum likelihood estimation, a change in mean/variance, etc.

The State change detector 61 and the configuration change detector 622 may use the same change detection algorithm or a different change detection algorithm.

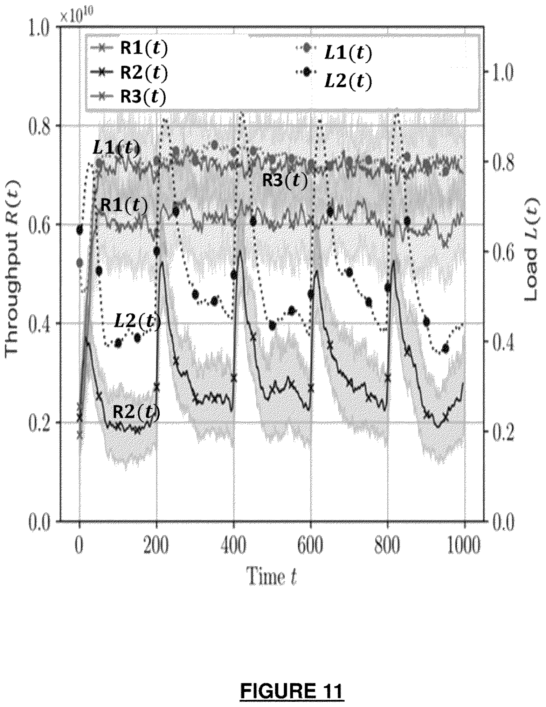

Figure 11 is a diagram comparing the evolution of the network throughput $R(t)$ and load $L(t)$ over the time t according to the embodiments of the disclosure, represented by curves $R1(t)$ and $L1(t)$, with respect to prior art naive approaches, represented by curves $R2(t)$ and $L2(t)$ for an update time $\tau_u = 200$ and by curves $R3(t)$ for an update time $\tau_u = 1$. The diagram of figure 11 corresponds to a coherence time $\tau_c$ equal to 10 slots ($\tau_c = 10$ slots).

As shown in figure 11, with the prior art approaches illustrated by curves $R2(t)$, $R3(t)$ and $L2(t)$, the instantaneous network throughput and load degrades as the during the time the configuration change control is fully implemented the network state has changed. In particular, the performance of the prior art naive approach represented by curves $R2(t)$ and $L2(t)$ significantly degrades when $\tau_u > \tau_c$ compared to the case when the configuration change control, represented by curve $R3(t)$, is implemented every slot, which in practice is not feasible due to various parameters such as the required processing time and operational complexity and signaling overhead.

In contrast, the embodiments of the disclosure, illustrated by the example of curves $R1(t)$ and $L1(t)$, enable maintaining the instantaneous network throughput $R1(t)$ and load $L1(t)$ substantially constant and an implementation within the coherence time of the network.

The architecture of the network state manager 60 and the network configuration manager 62 may be advantageously based on a pre-scaled set of representative logic functions based on the self-organizing radio maps 70. One or more function among these logic functions may act as network state mapper and descriptor.

The RAN controller 6 and the RAN control method according to the embodiments of the disclosure enable monitoring the evolution of network dynamic/state. In some embodiments, they may further enable detecting anomalies in the RAN 1 and possibly counteracting the detected anomalies.

The RAN controller 6 and the RAN control method according to the embodiments of the disclosure may take into account constraints related to the execution time of each logical module of the network state manager 60 and the network configuration manager 62 and constraints related to the coherence time of the observations provided by the RAN 1 to provide timely radio resource management.

The different modules of the RAN controller 6 may be co-located or distributed over the wireless network. For example:

- The network state management module 60 may be implemented within the network element where data is made available (e.g. user devices);

- The network configuration module 62 may be implemented within the network element defining the configurations (e.g. base stations);

- The actor-critic module 624 may be implemented within the network element responsible for decision making and network orchestration (for example, the network data analytics function (NWDAF) in 5G network).

In some embodiments, they may return a rendering, for example on a display, and an explicability of the radio resource management policies generated from the learning applied to components of the RAN controller 6.

The RAN controller 6 and the RAN control method according to the embodiments of the disclosure thereby enable minimizing, controlling, reducing and/or mitigating the risk associated with a suboptimal configuration selection strategy with respect to the coherence time of the network.

The embodiments of the disclosure enable efficient resource management not only in current but also in next-generation networks, for broad applications across a wide range of Radio Resources Management problems.

For example, the communication system 100 may be a wireless communication system such as a new radio (NR), a 5G and beyond 5G network.

A user device 4 may be configured to transmit data to a base station 10 (in this case, the user device acts as a transmitter) through one or more uplink channels (UL) or receive data from the base station 10 (in this case, the user device acts as a receiver), through one or more downlink channels (DL).

Exemplary applications may include for example and without limitations a Modulation and Coding Scheme (MCS) adaptation based on Channel State Information (CSI) feedbacks (also called "adaptive link adaptation"). In wireless networks, the quality of the communication channel between a transmitter and a receiver can vary due to several factors including fading, interference, and noise. CSI provides information about the channel quality, such as signal-to-noise ratio (SNR), signal-to-interference-plus-noise ratio (SINR), or other channel metrics. MCS adaptation based on CSI is a technique used in wireless communication systems (e.g. LTE, 5G) to optimize the transmission of data by adjusting the MCS according to the current channel conditions. MCS adaptation comprises selecting an appropriate modulation order (e.g. Quadrature Amplitude Modulation, Quadrature Phase Shift Keying, etc.) and coding rate (e.g., the amount of error-correcting code added to the data) based on the CSI. When the channel conditions are favorable (high SNR or SINR), a higher-order modulation and/or higher coding rate can be used, allowing for higher data throughput. Conversely, when channel conditions are poor, a lower-order modulation and/or lower coding rate can be selected to improve the robustness and reliability of the transmission, albeit at a lower data rate. With the adoption of Massive MIMO technologies with large antenna arrays, accurately representing, compressing and transmitting CSI is a crucial task for optimal Radio Resource Management. CSI transmission consumes communication resources. Frequent CSI transmissions and abrupt changes of the MCS can be detrimental to communication performance. By incorporating different logical units in the RAN controller 6 and real-time CSI analysis, representation and mapping, the embodiments of the disclosure enable a significant improvement over conventional methods by allowing proximal MCS selection:

- to minimize the signaling overhead due to CSI feedbacks thus reducing the energy consumption,

- to provide higher data rates,

- to improve reliability, and/or

- to provide better user experience.

In some embodiments, the input observation $o_t$ may correspond directly to the CSI (the estimated coefficients of the channel). This observation may be estimated at the receiver and reported to the transmitter via a dedicated channel. The transmitter may then select the MCS (the network configuration) based on some estimated parameters (e.g. SNR perceived by the receiver) to adapt the link. A good estimation of the parameters may ensure - efficient link adaptation.

According to some embodiments, the observation $o_t$ may also comprise the signals angle of arrival/departure and/or the mobility information of the user equipment, like velocity to better predict the conditions of the radio link. In such case, the network state management module comprising the SOM 70A may be collocated with the UE, which maintain representations of the locally measured information. The state change vector may then be reported to the transmitter, where the configuration management module 62 comprising the SOM 70B and the actor-critic module is located to make decision related to the MCS selection.

Another exemplary application of the disclosure may be cell selection/reselection based on CSI. Cell selection refers to the initial process that occurs when a user equipment 4 is powered on or enters a new coverage area. Cell reselection occurs when a user equipment 4 moves within the network and needs to change its serving cell (handover). In both processes, the user equipment 4 may be configured to measure the signal strength, the signal quality, and/or other channel metrics from neighboring cells in order to rank the available cells based on predefined criteria and selects or reselects the most suitable cell. The selection criteria may include factors such as the received signal strength, the signal-to-noise ratio (SNR), the signal-to-interference-plus-noise ratio (SINR), and other network-specific parameters. The goal of cell selection and reselection is to maintain the user equipment's connection to the best available cell providing acceptable quality of service to the UE. By making use of the different logical units, the RAN controller 6 according to the embodiments of the disclosure enables the user equipments to make intelligent and timely choices about which cells to connect to or handover to, ensuring seamless mobility, load balancing, and ultimately improving user experience and network efficiency. In this case, the configuration is related to the selection of the appropriate cell for the UE.

The skilled person will readily understand that the invention is not limited to these applications and include various others applications such as for example and without limitation handover management, channel assignment, beamforming and precoding, power control, etc.

More generally, the embodiments of the disclosure may apply to various applications such as Massive MTC (mMTC) to provide connectivity to a large number of devices that transmit sporadically a low amount of traffic, Machine-To-Machine (M2M), Web-of-Things (WoT), and Internet of Things (IoT).

Embodiments of the present disclosure can take the form of an embodiment containing software only, hardware only or both hardware and software elements.

Furthermore, the methods described herein can be implemented by computer program instructions supplied to the processor of any type of computer to produce a machine with a processor that executes the instructions to implement the functions/acts specified herein. The methods can be therefore computer-implemented methods (i.e. implemented in a computer system). The computer program instructions may also be stored in a computer-readable medium that can direct a computer to function in a particular manner. To that end, the computer program instructions may be loaded onto a computer to cause the performance of a series of operational steps and thereby produce a computer implemented process such that the executed instructions provide processes for implementing the functions specified herein.

It should be noted that the functions, acts, and/or operations specified in the flow charts, sequence diagrams, and/or block diagrams may be re-ordered, processed serially, and/or processed concurrently consistent with embodiments of the disclosure. Moreover, any of the flow charts, sequence diagrams, and/or block diagrams may include more or fewer blocks than those illustrated consistent with embodiments of the disclosure.

While embodiments of the disclosure have been illustrated by a description of various examples, and while these embodiments have been described in considerable detail, it is not the intent of the applicant to restrict or in any way limit the scope of the appended claims to such detail.

Additional advantages and modifications will readily appear to those skilled in the art. The disclosure in its broader aspects is therefore not limited to the specific details, representative methods, and illustrative examples shown and described.

**Claims**

1. A communication system (100) comprising a core network (2) and a Radio Access Network, RAN, controller (6) configured to control a RAN network (1), wherein the RAN controller (6) comprises :

   - a network state manager (60) configured to receive data inputs at different instant times, in an observation time window, a data input received at a given instant time belonging to an input observation space and characterizing the state of the network at said given instant time, the network state manager (60) being configured to apply at least one self-organizing radio map (70A) to each data input received at a given instant time, said at least one self-organizing radio map (70A) comprising an array of a set of units arranged in a grid describing said input observation space, which provides a best matching state unit at said given instant time, said determined best matching state units forming a state trajectory in the grid of the self-organizing radio map (70A);
   - a change state detector (61) configured to determine a state change vector from the best matching state units determined for the data inputs received in said observation time window, the state change vector comprising components, each component state of the change state vector comprising an instant time and an associated best matching state unit, among said determined best matching state units; and
   - A network configuration manager (62) configured to detect if a configuration change is to be triggered in the RAN network from the state change vector, within a coherence time of the RAN network.

2. The communication system of any preceding claim, wherein the change state detector (61) uses a regression technique based on the determined best matching state units.

3. The communication system of any claim 1 and 2, wherein the network configuration manager (62) comprises a configuration management module (620) configured to determine a Best Matching Configuration unit $BMCU_t$ for each determined Best Matching State unit corresponding to a given instant time, by applying at least one additional self-organizing radio map (70B) to each Best Matching State unit $BMSU_t$ comprised in the state change vector, the network configuration manager (62) further comprising a configuration change detector (622) configured to determine a configuration change vector, comprising components, each component of the configuration change vector comprising an instant time and an associated best matching configuration unit, among said determined best matching configuration units, wherein the configuration change vector is used to detect if a configuration change is to be triggered in the RAN network.

4. The communication system of any preceding claim, wherein the configuration state detector (622) uses a regression technique based on the determined best matching configuration units.

5. The communication system of claim 3 or 4, wherein the network configuration manager (62) comprises an action triggering module (62') configured to trigger an action to be executed to trigger said detected configuration change.

6. The communication system of claim 5, wherein the action triggering module (622) comprises a first unit (6240) configured to select one or more configuration change actions by mapping the current network state to one or more network configurations among predefined network configurations, according to a time criterion and to a cost criterion related to the performance parameters of the communication network (100).

7. The communication system of claim 6, wherein the first unit (6240) is configured to learn network configurations using a learning technique.

8. The communication system of any preceding claim 6 and 7, wherein the action triggering module (622) further comprises a second unit (6241) configured to evaluate the quality of the network configurations selected by the first unit (6240).

9. The communication system of claim 8, wherein the second unit (6241) is configured to compare predicted rewards with learned rewards corresponding to actual rewards obtained during a learning time window, said predicted rewards being determined by the second unit by applying a prediction function which predicts an expected cumulative reward, representing a predicted reward, for a given pair comprising a network state and an associated network configuration, taking into account predefined penalties applied when time constraints are violated, said second unit (6241) providing feedback to the first unit (6240) corresponding to said comparison.

10. The communication system of any preceding claim, wherein each self-organizing radio map is based on a neural network.

11. The communication system of claim 10, wherein the self-organizing radio map is based on a Kohonen network.

12. The communication system of any preceding claim, wherein said at least one self-organizing radio map used by the network state manager (62) represents different levels of representation of the input observation $o_t$.

13. The communication system of any preceding claim, wherein it comprises two RAN Intelligent Controllers, said RAN controller (6) being at least one of said RAN Intelligent Controllers.

14. A RAN control method, implemented in a Radio Access Network, RAN, controller (6) of a communication system (100) comprising a core network (2) and said RAN controller (6) for controlling a RAN network (1), wherein the method comprises :

   - receiving data inputs at different instant times, in an observation time window, a data input received at a given instant time belonging to an input observation space and characterizing the state of the network at said given instant time,
   - applying at least one self-organizing radio map (70A) to each data input received at a given instant time, said at least one self-organizing radio map (70A) comprising an array of a set of units arranged in a grid describing said input observation space, which provides a best matching state unit at said given instant time, said determined best matching state units forming a state trajectory in the grid of the self-organizing radio map (70A);
   - determining a state change vector from the determined best matching state units determined for the data inputs received in said observation time window, the state change vector comprising components, each component state of the change state vector comprising an instant time and an associated best matching state unit, among said determined best matching state units; and
   - detecting if a configuration change is to be triggered in the RAN network (1) from the state change vector, within a coherence time of the RAN network.

**FIGURE 1**

**5**   1

$\tau_c$

Radio Access
Network (RAN)

External
disturbance

Network state
(observations)

Message
exchange

$\tau_u$

Objective
functions

RAN
Controller

Configuration
(guidance, policies, parameters)

6

## FIGURE 2

**5**

**6**

**60**

**RAN CONTROLER**

| Network State Manager NSM |
|---|

**61**

| Change State Detector SCD |
|---|

**62**

| Network Configuration Manager NCM |
|---|

**1**

| RADIO ACCESS NETWORK |
|---|

**FIGURE 3**

**FIGURE 4**

**6**

**FIGURE 5**

62

620

622

624

## Network Configuration Manager

Configuration Management Module

Configuration Change Detector CCD

Action Triggering Module  ATM

## FIGURE 6

Start RAN control

Receiving a new observation $o_t$    100

Determining the best matching state unit ($BMSU_t$) using at least one SOM    102

Storing the $BMSU_t$ in the $BMSUs$ memory    103

Computing the change state vector $s \in S$ from the stored $BMSUs$    104

**FIGURE 7**

Receiving the change state vector $s$ — 110

For each observed $BMSU_t$ — 112

Determining the best matching configuration unit ($BMCU_t$) using at least one SOM — 114

Storing the $BMCU_t$ in the $BMCUs$ memory — 116

Determining the configuration change vector $c \in \mathcal{C}$ — 118

Triggering a configuration state change action from the configuration change vector $c \in \mathcal{C}$ — 119

**FIGURE 8**

624

**Action Triggering Manager**

6240

| Actor unit |
|------------|

6241

| Critic unit |
|-------------|

**FIGURE 9**

**FIGURE 10**

**FIGURE 11**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2022/167236 A1 (MELODIA TOMMASO [US] ET AL) 26 May 2022 (2022-05-26)<br>* paragraph [0004] - paragraph [0017] *<br>* paragraph [0070] - paragraph [0128] *<br>* paragraph [0214] - paragraph [0254] *<br>----- | 1-14 | INV.<br>H04W24/02<br>H04W16/18<br>H04L41/0823<br>H04L41/16 |
| A | US 2021/326662 A1 (MWANJE STEPHEN [DE] ET AL) 21 October 2021 (2021-10-21)<br>* figure 1 *<br>* paragraph [0001] - paragraph [0028] *<br>* paragraph [0086] - paragraph [0122] *<br>----- | 1-14 | ADD.<br>H04W16/22 |
| A | US 2023/114492 A1 (SONG JUHWAN [KR] ET AL) 13 April 2023 (2023-04-13)<br>* figures 1-4 *<br>* paragraph [0002] - paragraph [0010] *<br>* paragraph [0038] - paragraph [0075] *<br>----- | 1-14 | |
| A | US 2004/117226 A1 (LAIHO JAANA [FI] ET AL) 17 June 2004 (2004-06-17)<br>* paragraph [0019] - paragraph [0022] *<br>* paragraph [0061] - paragraph [0095] *<br>----- <br>-/-- | 1-14 | TECHNICAL FIELDS SEARCHED (IPC)<br><br>H04W<br>H04L |

The present search report has been drawn up for all claims

| Place of search | Date of completion of the search | Examiner |
|---|---|---|
| Munich | 2 December 2024 | Bösch, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

**Application Number**

EP 24 30 6193

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Paulo Valente Klaine ET AL: "A Survey of Machine Learning Techniques Applied to Self-Organizing Cellular Networks", IEEE Communications surveys and tutorials, 1 January 2017 (2017-01-01), pages 2392-2431, XP055767827, New York DOI: 10.1109/COMST.2017.2727878 Retrieved from the Internet: URL:https://www.researchgate.net/profile/Paulo_Valente_Klaine/publication/318476403_A_Survey_of_Machine_Learning_Techniques_Applied_to_Self_Organizing_Cellular_Networks/links/5b8fd3c092851c6b7ec0979f/A-Survey-of-Machine-Learning-Techniques-Applied-to-Self-Organizing-Cellular-Networks.pdf * paragraph [II.B] - paragraph [II.D] * * paragraph [IV.E] * * paragraph [0V.A] * ----- | 1-14 | |

TECHNICAL FIELDS
SEARCHED (IPC)

The present search report has been drawn up for all claims

| Place of search | Date of completion of the search | Examiner |
|---|---|---|
| Munich | 2 December 2024 | Bösch, Michael |

## ANNEX TO THE EUROPEAN SEARCH REPORT
## ON EUROPEAN PATENT APPLICATION NO.

EP 24 30 6193

This annex lists the patent family members relating to the patent documents cited in the above-mentioned European search report.
The members are as contained in the European Patent Office EDP file on
The European Patent Office is in no way liable for these particulars which are merely given for the purpose of information.

02-12-2024

| Patent document cited in search report | Publication date | Patent family member(s) | | Publication date |
|---|---|---|---|---|
| US 2022167236 A1 | 26-05-2022 | NONE | | |
| US 2021326662 A1 | 21-10-2021 | CN | 112534864 A | 19-03-2021 |
| | | EP | 3824665 A1 | 26-05-2021 |
| | | US | 2021326662 A1 | 21-10-2021 |
| | | WO | 2020015831 A1 | 23-01-2020 |
| US 2023114492 A1 | 13-04-2023 | CN | 118020370 A | 10-05-2024 |
| | | EP | 4366433 A1 | 08-05-2024 |
| | | US | 2023114492 A1 | 13-04-2023 |
| US 2004117226 A1 | 17-06-2004 | AT | E413744 T1 | 15-11-2008 |
| | | EP | 1374486 A1 | 02-01-2004 |
| | | US | 2004117226 A1 | 17-06-2004 |
| | | WO | 02080458 A1 | 10-10-2002 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20210045193 A1

- US 20200252142 A1

**Non-patent literature cited in the description**

- **KILLICK, R. ; FEARNHEAD, P. ; ECKLEY, I. A.** Optimal detection of changepoints with a linear computational cost. *Journal of the American Statistical Association*, 2012, vol. 107 (500), 1590-1598